# EUROPÄISCHE PATENTANMELDUNG

(11) **EP 2 527 084 A2**
(43) Veröffentlichungstag der Anmeldung: **28.11.2012**
(21) Anmeldenummer: 12169144.8
(22) Anmeldetag: 23.05.2012
(51) Int. Cl.: B23Q 17/24, B21D 3/00, G01M 1/14

(54) **Verfahren zum Zentrieren rotationssymmetrischer Körper sowie Anlage dafür**

(30) Priorität: 26.05.2011 DE 102011050654
(71) Anmelder: Gesenkschmiede Schneider GmbH, 73431 Aalen (DE)
(72) Erfinder: Kolbe, Peter, 73434 Aalen (DE); Schmitz, Ernst-Peter, 73453 Abtsgmünd (DE); Körner, Thomas, 58332 Schwelm (DE)
(74) Vertreter: Neidl-Stippler, Cornelia

(57) **Zusammenfassung**

Die Erfindung betrifft ein Verfahren zum Zentrieren im wesentlichen rotationssymmetrischer hohler länglicher Werkstücke, hohler Wellen und Achsen, mit den Schritten: Optisches Scannen von zumindest Abschnitten des zu zentrierenden hohlen Werkstücks; Einspielen der gescannten Daten in einen Prozessor zur Ermittlung von Schwerpunkten des Werkstücks an Einzelzylindern (15) der Abschnitte aus den Daten der Scanstation und Bildung eines gemeinsamen Schwerpunkts aus denselben; Erstellung von Fräsanweisungen und Übermittlung derselben an eine Fräsmaschine; Überführen des gescannten Werkstücks in die Fräsmaschine und Einfräsen von Zentren zur Wuchtzentrierung des rohen Werkstücks entsprechend eines vom Prozessor durchgeführten Vergleichs zwischen den gescannten Daten des Werkstücks und Idealdaten aus einem CAD-Modell; und Überführen des zentrierten Werkstücks in die Endbearbeitungs-Fräsmaschine; Einspannen desselben entlang der so ermittelten, durch die Zentren verlaufenden Wuchtachse und spanabhebende Endbearbeitung des Werkstücks auf die Endmasse, eine Anlage zum Auswuchten im wesentlichen rotationssymmetrischer länglicher hohler Werkstücke, sowie danach hergestellte hohle Werkstücke, ausgewählt aus rotationssymmetrischen hohlen Getriebewellen, Antriebswellen, Achsen.

## Beschreibung

Die Erfindung bezieht sich auf ein Verfahren nach dem Oberbegriff des Anspruchs 1, eine Anlage zur Herstellung von hohlen Wellen und Achsen sowie auf damit hergestellte hohle Wellen und Achsen.

Rotationssymmetrische längliche hohle Werkstücke wie Getriebewellen, Achsen oder dergleichen, oder aber rotierende Teile, insbesondere aus/für der/die Kraftfahrzeugindustrie werden häufig unter Verformungsverfestigung durch Schmieden, Querkeilwalzen etc. durch halbwarme oder warme Umformverfahren produziert.

Typische Herstellungsverfahren, die zu Verformungsverfestigung führen, sind hier:
- Schmieden auf einer Rundknetmaschine über einen oder mehrere Dorne
- Querkeilwalzen mit Dorneinrichtung.

Die Verfahren können aufgrund der herstellungsverfahrensbedingten Verfestigung leichte und dennoch mechanisch widerstandsfähige Teile herstellen. Sie lassen sich mit Materialien durchführen, welche Verformungsverfestigung zeigen.

Ein geeignetes Verfahren zur Herstellung von Werkstücken für rotationssymmetrische Wellen ist das Querkeilwalzen, wie es in der DE102012104413.9 sowie der WO 2008/003305A1 beschrieben ist und auf deren Offenbarung zur Vermeidung von Wiederholungen in vollem Umfang bezug genommen wird. Speziell das Querkeilwalzen von Hohlteilen, wie hohlen Getriebewellen, führt zu einem sehr parallelen und rotationsssymmetrischen Wandoberflächenverlauf und Verformungsverfestigung. Aufgrund der besseren Festigkeit können für die fertigen Teile dünnere Wandstärken verwendet werden, als bisher für derartige Teile üblich war.

Knetverfahren mir Verformungsverfestigung, wie Schmiedeverfahren oder Querkeilwalzen, führen aber zu grösseren Fertigungstoleranzen, als es bei der rein spanenden Bearbeitung üblich ist. Ferner treten oftmals Krümmungen auf, die durch z. B. nach Wärmebehandlungen zutage treten.

Derartige Werkstücke - Wellenrohteile - werden dann durch spanende Verfahren auf Endform bearbeitet - d.h. es werden Zahnkränze, Lager etc. mittels spanabhebender

Verfahren herausgearbeitet. Für die Endbearbeitung zum rotationssymmetrischen Endprodukt wird das rotationssymmetrische Wellenrohteil in eine Zentriereinrichtung eingespannt.

Problematisch ist, dass derartige Wellen sowohl in der Fräsmaschine für die Endbearbeitung des Werkstücks und auch im späteren Gebrauch im wesentlichen ohne Unwucht laufen sollen, d.h. eine möglichst geringe Unwucht aufweisen sollen. Dies ist insbesondere bei hohlen Wellen wichtig.

Bisher wurden derartige Teile häufig vermessen und geradegebogen, wie bereits aus der DE 19945361 bekannt ist. Eine Biegerichtmaschine dieser Art ist auch in der DE 197 37 231 A1 beschrieben. In dieser bekannten Maschine sind Zentrierspitzen in Wälzlagern gelagert und drehen sich bei der Drehung des Werkstücks mit. Die Drehachse ist hierbei die Verbindungsachse der Wälzlager, die ihrerseits eine erhebliche Genauigkeit aufweisen und ausserdem spielfrei justierbar sind.

Dies bedeutet ggf. Richthübe, entsprechend mehr Maschinentaktzeit und vor allem auch eine unnötige Belastung des meist oberflächengehärteten Werkstücks mit der Gefahr des Ausfalls durch Rissbildungen während des Richtvorgangs. Dabei ist zu berücksichtigen, dass die Anzahl notwendiger Richthübe überproportional zum Kehrwert der Richtgenauigkeit ansteigt.

Die bisherigen hohlen Wellen/Achsen waren häufig schwer, nur mit grossem Ausschuss herstellbar und forderten einen hohen Herstellungsaufwand. Für Schalt- oder Lenkgetriebe heutiger Kraftfahrzeuge sind beispielsweise maximale Rundlaufabweichungen eines länglichen rotationssymmetrischen Werkstücks von etwa 30 bis 80 cm Länge von um 0,02 mm üblich. Zum Ausgleich müsste das Werkstück also sehr genau ausgewuchtet/zentriert werden. Getriebewellen sind aber auch in Energieerzeugungsanlagen, Schienenfahrzeugen und sonstigen An- und Abtrieben üblich. Die Teile werden in grosser Stückzahl gefertigt und haben lange Standzeiten - d.h. sie sollen über die gesamte Lebensdauer störungsfrei arbeiten. Heute wird zudem Materialersparnis sowie geringes Gewicht generell gefordert - also dünne Wandstärken bei gleicher mechanischer Leistung.

Der Erfindung liegt die Aufgabe zugrunde, derartige hohle Wellen/Achsen bzw. ihre Herstellung zu verbessern,

Die Aufgabe wird durch das Verfahren nach Anspruch 1 bzw. eine Anlage mit den Merkmalen des Patentanspruches 4 und eine Hohlwelle mit den Merkmalen des Anspruchs 6 gelöst. Vorteilhafte Weiterbildungen ergeben sich aus den abhängigen Ansprüchen.

Erfindungsgemäss wird die Unwucht des hohlen Werkstücks aus dem Umformvorgang berechnet durch Vermessen/Scannen des in einer Zentriermaschine in einer Vorrichtung positioniert gespannten Werkstückrohlings, Berechnen von Schwerpunkten von Werkstückabschnitten und Bildung eines gemeinsamen Schwerpunktes als Summe der einzelnen Schwerpunkte. Dies wird mit dem idealen CAD-Modell der Welle verglichen. Die Abweichung der Einzelzylinder der Werkstückabschnitte wird in Relation zur Idealkontur des CAD-Modells gesetzt und so eine Best-Off Schwerpunktsachse entlang der Längsachse des Werkstücks vom Prozessor ermittelt.

Die so gescannte Welle wird dann nach Ermittlung der Schwerpunktachse in der Zentriermaschine ausgewuchtet. Dazu werden Zentren im Koordinatensystem auf der Zentriermaschine aussermittig in die Bauteilstirnflächen eingefräst, da Restbohrungen vom Schmieden zu Versatz des Zentrierbohrers führen könnten. Das Teil wird in die Endbearbeitungs-Fräsmaschine überführt (es ist aber auch möglich, dass die Zentrierfräsmaschine mit dieser identisch ist) und das so eingespannte Teil auf die Endmasse spanabhebend bearbeitet. Es wird so eine ausgewuchtete rotationssymmetrisches hohles Teil, bspw. eine Getriebewelle, mit eingefrästen Formen, wie Zahnkränzen oder Lagern, erhalten.

Durch die so ermittelte ausgewuchtete Zentrier-Achse im Werkstück-Rohteil ist es möglich, schnell ein zentriertes, gewuchtetes Teil für die Endbearbeitung zu erhalten, wobei bspw. Wuchtgüten von zwischen G16 bis G100 (entspricht bei Stahl G16= 0,55 - 0,87 kg/mm und G 100= 3.6 bis 5.5kg/mm bei einem Wellengewicht von 10 - 20 kg) erzielt werden konnten.

Es ist aber auch möglich, andere Werkstoffe so zu bearbeiten, bspw. Aluminiumknetlegierungen, Titanknetlegierungen oder Magnesiumknetlegierungen, falls besonders leichte Wellen/längliche Hohlteile erwünscht sind.

Die Ansprüche beziehen sich auch auf eine erfindungsgemässe Vorrichtung zum Wuchtzentrieren Warm- oder Halbwarm-gefertigter verformungsverfestigter Wellen. Dazu wird das aus der Warmfertigung stammende hohle Werkstück für die Welle in eine Spannvorrichtung einer Zentriermaschine eingebracht. Diese kann fest in der Zentriermaschine fixiert sein. Die Zentriermaschine dient auch als Bearbeitungs-vorrichtung.

Ein Drehtisch die Welle zum Zentrieren in die Zentriermaschine, welche dann das Berechnen und Zentrieren der Zentren durchführt. Ein Roboter entnimmt die zentrierte Welle und legt eine neue Welle in die Vorrichtung.

Die Welle kann auch in einer Drehvorrichtung ausserhalb der Zentriermaschine um 360°gedreht und gescannt werden. Dabei ist eine Markierung zur Lageerkennung des Koordinatensystems in der Maschine notwendig bzw. muss der Robotergreifer die Welle exakt in die Maschine einlegen.

Zum Scannen können 360° der Welle gescannt werden - ggf. reichen aber auch Teilbereiche als Scanbereiche aus. Die Fertigung der Wellen folgt gewissen Gesetzmaessigkeiten hinsichtlich Durchmesservariation, Ovalität, Durchbiegung, Verdrillung. Diese Gesetzmässigkeit ist entscheidend für die Auswahl der Scanflächen bzw. des Scanumfangs.

Eine Zentriervorrichtung weist eine Einrichtung zum Ausrichten der Maschine auf. Die zu zentrierende Welle wird dann auf zwei Punkten/Seite des Scanbereichs aufgelegt. Die gescannten Daten der Welle werden gemeinsam mit den CAD-Idealdaten direkt in die Maschine eingelesen und dann das jeweilige Zentrum in die Stirnflächen des Werkstücks für die Welle entsprechend der idealsten Lage der fertigen Welle gefräst. An diesen Zentren wird das Werkstück für die endgültige spanabhebende Bearbeitung eingespannt.

Wichtig ist, dass erfindungsgemäss keine weitere aufwändige mechanische Bearbeitung der Welle zum Auswuchten notwendig ist, sondern die Welle als Ganzes ausgewuchtet aus der Vorrichtung entladen wird, was weitere Bearbeitungsschritte erspart. Überraschenderweise wird auch nach dem Bearbeiten der Welle auf Endmasse eine ausgewuchtete Hohlwelle erhalten.

Die Erfindung umfasst sowohl die unmittelbare Hintereinanderanordnung der Maschinen als auch den Fall, dass zwischen die Maschinen eine oder mehrere andere Behandlungsstationen eingeschaltet sind, z. B. eine Anlassstation oder Vergütungsstation.

Nachfolgend wird die Erfindung anhand der schematischen Zeichnung näher erläutert, auf die sie keineswegs eingeschränkt ist. Darin zeigt:
Fig. 1 eine Ansicht einer idealen (CAD-Vorgabe) Welle
Fig. 2 eine Ansicht eines gekrümmten hohlen Wellenrohlings
Fig. 3 eine Ansicht einer Wellenstirnseite mit eingefrästem, berechnetem Zentrum und
Fig. 4 schematisch eine Vorrichtung zum Auswuchten eines im wesentlichen rotationssymmetrischen Rohlings mit Längsachse.
Fig. 5 schematisch Bearbeitungsschritte einer querkeilgewalzten Hohlwelle zu einer Getriebewelle; und
Fig. 6 eine Darstellung des Wandverlaufes in einer fertigen, querkeilgewalzten Welle

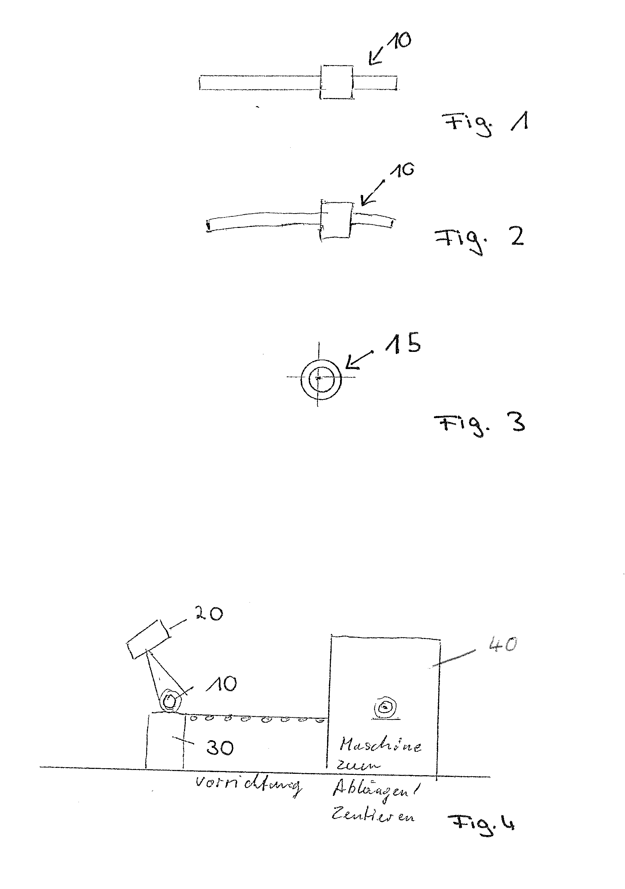

In Fig. 1 zeigt schematisch eine ideale Welle, wie sie aus der CAD-Konstruktion berechnet wurde. Deutlich sieht man, dass diese gerade verläuft und ihre Wuchtlinie zentrisch angeordnet ist.

In Fig. 2 ist als vereinfachtes Beispiel ein geschmiedetes zylindrisches Werkstück für eine Hohlwelle 10 mit senkrechter Stirnflächen wiedergegeben. Das Werkstück für die Welle 10 ist z. B. von der Wärmebehandlung her verzogen bzw. gekrümmt, so dass die Schwerpunktachse A gekrümmt verläuft und in der Mitte der Länge des Werkstücks 10 ein seitlicher Versatz der Schwerpunktachse A gegenüber einer zentrischen Verbindungsgeraden zwischen den geometrischen Stirnflächenzentren auftritt. Der seitliche Versatz wird als Krümmung fR/2 bezeichnet. Der sogenannte Rundlauffehler fR ist das Doppelte dieses Betrages.

In Fig. 3 ist die Stirnseite des geschmiedeten Werkstücks 10 nach Auswuchten mit angezeichneter ermittelter Wuchtlinie 15, die gegenüber der Mitte versetzt ist, gezeigt. Durch diesen Versatz ist ein Rundlaufen des Werkstücks für die Welle 10 möglich, obwohl diese keine Idealgestalt aufweist.

Fig. 4 zeigt eine Wuchtanlage zum Auswuchten im wesentlichen rotationssymmetrischer hohler Körper. Die hier speziell gezeigte Vorrichtung dient zur automatischen Auswuchtung eines Werkstücks für eine Welle. Deutlich ist erkennbar, dass in einer Scanvorrichtung 20 mit Spannvorrichtung 30 und Scanner 20 das Werkstück für die Welle 10 zunächst geometrisch vermessen wird. Dieses vermessene Werkstück 10 wird nun eingespannt in die Zentrierstation/Fräsmaschine 40 überführt, wo es ggf. abgelängt und Zentren 15 in die Werkstückstirnflächen eingefräst werden, damit dieses rundlaufen kann.

Die Anlage weist einen (nicht gezeigten) Prozessor auf, in den die vom Scanner ermittelten Daten über die Geometrie des Werkstücks 10 sowie die aus der CAD-Konstruktion stammenden Idealdaten eingelesen werden. Aus diesen Daten wird die ideale Massenverteilung des Werkstücks berechnet und von der Frässtation entsprechend Zentren in die Stirnflächen des Werkstücks 10 entsprechend der idealsten Lage gefräst.

Dadurch, dass hier ein vollautomatisiertes Zentrierverfahren durchgeführt wird, ist es möglich, mit hoher Sicherheit und nachvollziehbar automatisiert das Auswuchten von Werkstücken für Wellen durchzuführen. Die Erfindung ist aber keineswegs nur auf Werkstücke für Wellen beschränkt - sie kann in gleicher Weise für Rotoren beliebiger Art eingesetzt werden.

### Ausführungsbeispiel:

### Herstellung einer Getriebewelle

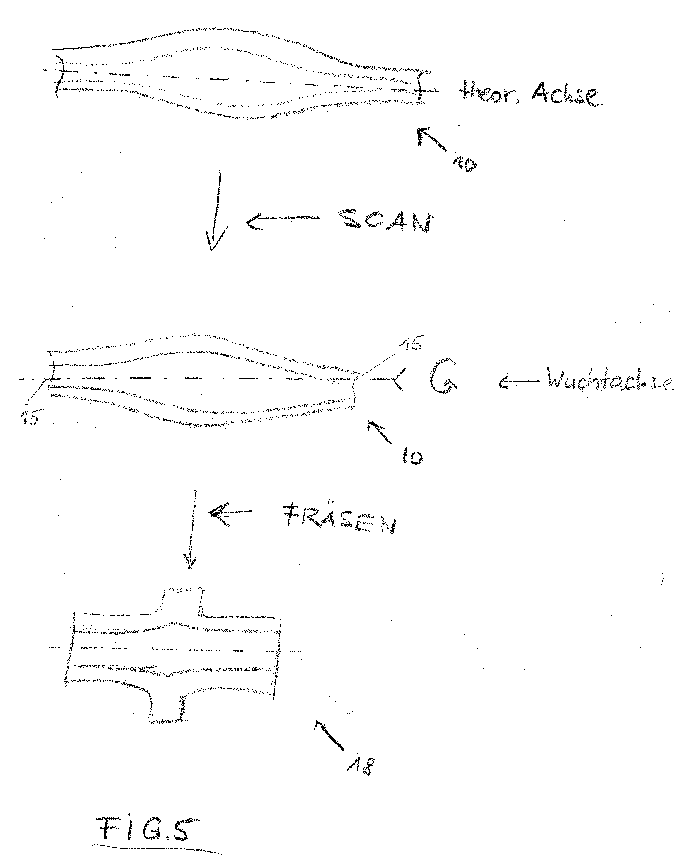

Auf einer Querkeilwalzmaschine mit Dorneinrichtung wird ein hohles Werkstück für eine Fahrzeuggetriebewelle aus 16MnCrS4 Stahl mit einem Gewicht von 15 kg, einer Länge von 50 cm, einem Aussendurchmesser von 22 cm, einer Durchgangsöffnung eines Durchmessers von etwa 70 mm und einer minimalen Wanddicke von etwa 15 mm hergestellt (s. Fig. 5). Durch das Herstellungsverfahren verläuft der Faserverlauf des Werkstücks in Längsrichtung parallel zu den Aussenflächen.

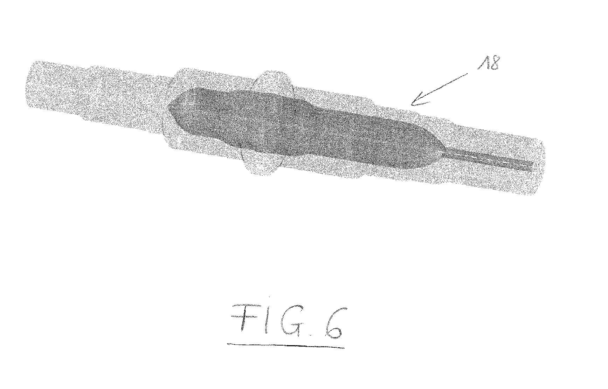

Die Aussenkontur des so hergestellten hohlen Werkstücks, eines Getriebewellenrohlings, wird nun in einer optischen Scaneinrichtung vermessen und aus der Aussenkontur eine Wuchtachse/Bearbeitungsgewichtsachse berechnet (Die Wuchtlinie liefert eine Wuchtgüte von G40 (= 2,16 kg/mm) für das noch spanabhebend auf Endform zu bearbeitenden hohlen Werkstücks 10). Entsprechend werden die Stirnflächen des hohlen Werkstücks 10 durch ein Fräswerkzeug so bearbeitet, dass das Werkstück an den Zentren entlang der so bezeichneten Bearbeitungsachse in einer Endbearbeitungs-Fräsmaschine eingespannt und bearbeitet werden kann. Fig. 6 zeigt den Wandverlauf einer fertigen Welle.

Es wird so eine leichte Getriebewelle 18 erhalten, bei der aufgrund der Verformungsverfestigung im Wandbereich kein Vollmaterial eingesetzt werden muss bzw. aufgrund der Verformungsverfestigung die Wanddicke gegenüber bekannten hohler Getriebewellen erheblich reduziert werden kann. Gegenüber üblichen Getriebewellen aus dem gleichen Material, die durch Bohren von Vollmaterial oder aus dicken gezogenen Rohren hergestellt werden, ist eine Gewichtsersparnis von bis zu 50% möglich. Durch Einsatz spezieller Leichtmetalllegierungen ist eine weitere Gewichtsherabsetzung gegenüber Wellen aus Stahl möglich.

Obige Beschreibung offenbart lediglich eine exemplarische Ausführungsform der Erfindung. Dem Fachmann ist aus der Beschreibung und den beigefügten Zeichnungen und Patentansprüchen offensichtlich, daß verschiedenste Veränderungen, Modifikationen und Variationen innerhalb des Schutzbereichs der Ansprüche möglich sind.

### Bezugszeichenliste

- 10: Werkstück
- 15: gefrästes Zentrum
- 18: hohle Getriebewelle
- 20: Scanner
- 30: Spannvorrichtung
- 40: Zentrierstation

## Patentansprüche

1. Verfahren zum Zentrieren im wesentlichen rotationssymmetrischer hohler länglicher Werkstücke, hohlen Wellen und Achsen, mit den Schritten
Optisches Scannen von zumindest Abschnitten des zu zentrierenden hohlen Werkstücks;
Einspielen der gescannten Daten in einen Prozessor zur Ermittlung von Schwerpunkten des Werkstücks an Einzelzylindern (15) der Abschnitte aus den Daten der Scanstation und Bildung eines gemeinsamen Schwerpunkts aus denselben; Erstellung von Fräsanweisungen und Übermittlung derselben an eine Fräsmaschine;
Überführen des gescannten Werkstücks in die Fräsmaschine und Einfräsen von Zentren zur Wuchtzentrierung des rohen Werkstücks entsprechend eines vom Prozessor durchgeführten Vergleichs zwischen den gescannten Daten des Teils und Idealdaten aus einem CAD-Modell; und
Überführen des zentrierten Werkstücks in die Endbearbeitungs-Fräsmaschine; Einspannen desselben entlang der so ermittelten, durch die Zentren verlaufenden Wuchtachse und spanabhebende Endbearbeitung des Werkstücks auf die Endmasse.

2. Verfahren nach Anspruch 1, **dadurch gekennzeichnet, dass** die Fräsmaschine zum Einfräsen der Zentren und zur Endbearbeitung des Werkstücks identisch ist.

3. Verfahren nach Anspruch 1 oder 2, **dadurch gekennzeichnet, dass** das hohle Werkstück ein verformungsverfestigtes hohles Werkstück ist.

4. Verfahren nach einem der vorangehenden Ansprüche, **dadurch gekennzeichnet, dass** das Werkstück hergestellt ist aus Stahlknetlegierungen, Titanknetlegierungen, Aluminiumknetlegierungen, Magnesiumknetlegierungen

5. Anlage zum Auswuchten im wesentlichen rotationssymmetrischer länglicher hohler Werkstücke,
mit:
- einer Scanstation (20, 30) zur Ermittlung der Aussenkontur eines hohlen Werkstücks (10);
einem Prozessor zur Ermittlung von Schwerpunkten des hohlen Werkstücks (10) an Einzelzylindern (15) der Abschnitte aus den Daten der Scanstation und Bildung eines gemeinsamen Schwerpunkts aus denselben; Erstellung von Fräsanweisungen und Übermittlung derselben an eine Fräsmaschine;
einer Fräsmaschine zum Einfräsen von die Wuchtachse bestimmenden Zentren in die Stirnflächen des rotationssymmetrischen hohlen länglichen Werkstücks gemäss den Fräsanweisungen des Prozessors; sowie
eine Fräsmaschine (40), welche das hohle Werkstück entlang der Wuchtachse an den eingefrästen Zentren einspannt und spanabhebend auf Endmasse entsprechend Fräsanweisungen bearbeitet.

6. Anlage nach Anspruch 5, **dadurch gekennzeichnet, dass** die Fräsmaschine zum Einfräsen von die Wuchtachse bestimmenden Zentren und die Fräsmaschine für die spanabhebende Bearbeitung der Welle identisch sind.

7. Hohles Werkstück, ausgewählt aus rotationssymmetrischen hohlen Getriebewellen, Antriebswellen, Achsen, hergestellt nach einem Verfahren der Ansprüche 1 - 4..
